# FASCICULE DE BREVET EUROPEEN

(11) **EP 3 568 616 B1**
(45) Date de publication et mention de la délivrance du brevet: **05.08.2026**
(21) Numéro de dépôt: 18703050.7
(22) Date de dépôt: 10.01.2018
(51) Int. Cl.: F02F 3/10, F16J 9/00, F16J 1/02

(54) **PISTON POUR MACHINE THERMIQUE, MACHINE THERMIQUE COMPRENANT UN TEL PISTON, ET PROCEDES**
KOLBEN FÜR EINE WÄRMEKRAFTMASCHINE, WÄRMEKRAFTMASCHINE MIT SOLCH EINEM KOLBEN UND VERFAHREN
PISTON FOR A HEAT ENGINE, HEAT ENGINE COMPRISING SUCH A PISTON, AND METHODS

(30) Priorité: 11.01.2017 FR 1750238
(43) Date de publication de la demande: 20.11.2019
(73) Titulaire: HYDROMECANIQUE ET FROTTEMENT, 42160 Andrézieux-Bouthéon (FR)
(72) Inventeur: PROST, Fabrice, 42000 Saint-Etienne (FR); HEAU, Christophe, 42100 Saint-Etienne (FR); MONTELIMARD, Romain, 42330 Saint-Galmier (FR)
(74) Mandataire: Ipsilon
(86) Numéro de dépôt international: PCT/FR2018/050052
(87) Numéro de publication internationale: WO 2018/130779

(56) Documents cités:
- EP-A1- 3 061 960
- DE-A1- 4 113 773
- DE-A1- 4 310 491

## Description

La présente invention concerne un piston pour machine thermique, notamment pour moteur thermique à mouvement alternatif et à combustion interne. L'invention concerne également une machine thermique comprenant un tel piston. L'invention concerne également un procédé de revêtement d'un tel piston. L'invention concerne enfin un procédé de mise en œuvre d'une telle machine thermique.

Le domaine de l'invention est celui des pistons de machines thermiques, notamment de moteurs thermiques à mouvement alternatif et à combustion interne.

De manière connue, un tel piston comprend une jupe, une tête et un porte-segments. Au sein du moteur, le piston est animé d'un mouvement de translation alternatif dans la chemise du bloc-cylindres. La jupe est prévue pour guider le piston dans la chemise. La tête est prévue pour être disposée au contact des gaz de combustion, et recevoir les efforts dus à ladite combustion. Le porte-segments est situé entre la jupe et la tête. Le porte-segments comprend une alternance de cordons et de gorges, lesquelles sont prévues pour recevoir des segments.

Les cycles actuels de mesure de la pollution/consommation des véhicules, tels que le NEDC (« New European Driving Cycle » en anglais), ont entrainé une tendance à la réduction de cylindrée des moteurs (« downsizing »). Les nouveaux moteurs présentent une plus petite cylindrée, tout en développant autant de puissance.

A l'horizon 2017, le nouveau cycle WLTP (« Worldwide Harmonized Light Vehicles Test Procedure ») favorisera les moteurs de forte puissance.

Ainsi, il s'en suit une augmentation de puissance à iso-cylindrée, et donc une augmentation des contraintes thermiques et mécaniques au sein des chambres de combustion. La conséquence est le remplacement progressif des pistons, qui sont aujourd'hui majoritairement en alliage d'aluminium pour les véhicules légers, par des pistons en acier.

Afin de limiter au maximum l'impact de ce changement sur le poids des pistons, leur géométrie est modifiée, conduisant à des pistons courts. Cette modification de géométrie entraîne une modification du contact piston/chemise, et donc des zones d'appui (contact et frottement).

Pour les véhicules équipés de pistons en aluminium, le contact piston/chemise est optimisé en déposant sur la jupe un revêtement en graphite.

Pour les véhicules légers grande série équipés de pistons en aciers, la zone revêtue est encore préférentiellement la jupe. Cependant, il parait de plus en plus important de reconsidérer les zones d'appui du piston sur la chemise lors de son mouvement alternatif, qui tendrait à diminuer le jeu au niveau des cordons du piston.

Par ailleurs, les pistons en aciers sont majoritairement utilisés dans les moteurs de véhicules industriels, du fait des pressions de combustion pouvant atteindre 250 bars. Au cours des dernières années, il n'y a pas eu de grandes modifications du contact piston/chemise dans ces moteurs.

DE 41 13 773 et DE 43 10 491 divulguent des pistons illustrant l'état de la technique, pourvu de cordons de contact dont le diamètre est égal au diamètre de la jupe.

Dans DE 41 13 773, les cordons de contact comportent un revêtement d'épaisseur variable autour de l'axe central.

Dans DE 43 10 491, les cordons de contact comportent une couche épaisse de résine synthétique. Par exemple, cette résine synthétique est en polyamide, incorporant du graphite et des particules métalliques. La couche de résine a une épaisseur comprise entre 15 et 25 µm.

Ces pistons ne sont pas entièrement satisfaisants, en termes de réduction de l'usure et du risque de grippage.

Le but de la présente invention est de proposer un piston amélioré, en tenant compte du contexte ci-dessus.

A cet effet, l'invention a pour objet un piston de moteur thermique, comprenant :
- une jupe qui est prévue pour guider le piston en translation suivant un axe central dans une contre-pièce et constitue une première zone d'appui du piston dans la contre-pièce,
- une tête qui s'étend transversalement à l'axe central et est prévue pour être disposée au contact des gaz de combustion, et
- un porte-segments qui comprend au moins deux cordons et au moins deux gorges prévues pour recevoir des segments, incluant un premier cordon jouxtant la tête et un deuxième cordon situé entre le premier cordon et la jupe,

caractérisé en ce que les cordons incluent au moins un cordon de contact ayant un diamètre supérieur à un diamètre minimal de la jupe afin de constituer une deuxième zone d'appui du piston dans la contre-pièce,
et en ce que l'au moins un cordon de contact comporte un revêtement de surface réducteur de frottement, formé au moins sur un secteur radial couvrant un angle d'au moins 30 degrés, et jusque sur un unique secteur couvrant un angle de 360 degrés.

Le demandeur a observé que dans les nouveaux concepts d'attelage mobile, au moins l'un des cordons du porte-segments est susceptible de devenir une zone de contact et de frottement avec la chemise. De tels frottements entraînent une augmentation de la consommation de carburant et donc des émissions de CO2.

Dans ce contexte, l'invention permet d'optimiser le contact piston / chemise au sein du moteur. En prévoyant un cordon de contact de diamètre supérieur, l'invention permet de définir une zone d'appui privilégiée au niveau du porte-segments, complémentaires de la zone d'appui définie au niveau de la jupe. En appliquant un revêtement de surface au moins sur ce cordon de contact, l'invention permet de réduire le coefficient de frottement entre les deux pièces en contact et en mouvement l'une par rapport à l'autre. En outre, l'invention permet de réduire fortement l'usure et/ou le risque de grippage.

Dans le cadre de l'invention, le diamètre des cordons de contact est considéré sans le revêtement, tandis que le diamètre de la jupe est considéré sans les alésages et renfoncements.

Selon d'autres caractéristiques avantageuses de l'invention, prises isolément ou en combinaison :
- L'au moins un cordon de contact a un diamètre supérieur à un diamètre moyen de la jupe.
- Le piston est un piston court, présentant une hauteur inférieure à son diamètre.
- Le matériau de base du piston est l'acier. Autrement dit, la jupe, la tête et le porte-segments du piston sont en acier. De préférence, cet acier est un acier forgé.
- Le revêtement de surface réducteur de frottement est en carbone amorphe type DLC (« diamond-like carbon » en anglais) a-C:H ou ta-C.
- L'au moins un cordon de contact comporte au moins une sous-couche formée sous le revêtement de surface réducteur de frottement.
- L'au moins un cordon de contact est dépourvu de sous-couche formée sous le revêtement de surface réducteur de frottement.
- Le deuxième cordon a un diamètre supérieur au premier cordon.
- Parmi les cordons du porte-segments, seul le ou les cordons de contact comportent un revêtement de surface réducteur de frottement.
- Le porte-segments comprend deux cordons de contact.
- Les deux cordons de contact sont le deuxième cordon et un troisième cordon.
- Les deux cordons de contact sont le premier cordon et le deuxième cordon.
- Le revêtement de surface réducteur de frottement est formé sur un unique secteur radial couvrant un angle d'au moins 30 degrés.
- Le revêtement de surface réducteur de frottement est formé sur deux secteurs radiaux diamétralement opposés par rapport à l'axe central et couvrant chacun un angle d'au moins 30 degrés.
- Le ou chaque secteur radial couvre un angle limité à 30 degrés.
- Le ou chaque secteur radial couvre un angle limité à 45 degrés.
- Le ou chaque secteur radial couvre un angle limité à 60 degrés.
- Le ou chaque secteur radial couvre un angle limité à 90 degrés.
- Le ou chaque secteur radial couvre un angle limité à 120 degrés.
- Le revêtement de surface réducteur de frottement est formé sur 360 degrés autour de l'axe central.
- Le revêtement de surface réducteur de frottement a une rugosité maximale Rz inférieure ou égale à 2 µm, de préférence inférieure ou égale à 0,5 µm, obtenue par exemple par polissage ou ponçage.
- Le revêtement de surface réducteur de frottement a une épaisseur, définie radialement à l'axe central, comprise entre 1 et 5 µm, de préférence entre 2 et 3 µm.
- Le revêtement de surface réducteur de frottement a une épaisseur inférieure ou égale à 10 µm.
- Le premier cordon est dépourvu de revêtement.
- Les gorges sont dépourvues de revêtement.

L'invention a également pour objet une machine thermique, comprenant un piston tel que mentionné ci-dessus, et une contre-pièce recevant le piston.

Par exemple, la contre-pièce peut être en acier, en acier inoxydable, en fonte, en alliage d'aluminium, etc.

De préférence, la contre-pièce comporte un revêtement de surface réducteur de frottement en carbone amorphe type DLC.

Lorsque la machine thermique est un moteur, la contre-pièce est une chemise.

La chemise peut être une chemise sèche, solidaire d'un carter du bloc-cylindres.

En alternative, la chemise peut être une chemise humide, amovible par rapport au carter du bloc-cylindres, avec un liquide de refroidissement interposé entre la chemise et le carter.

De préférence, la chemise comporte un revêtement de surface réducteur de frottement pour réduire l'usure et/ou le risque de grippage. Encore de préférence, ce revêtement est en carbone amorphe type DLC. A titre d'exemple non limitatif, la chemise et son revêtement peuvent être conformes aux enseignements du document WO2013/164690.

L'invention a également pour objet un procédé de revêtement d'un piston tel que mentionné ci-dessus. Le procédé est caractérisé en ce qu'il comprend les étapes suivantes :
- une étape de positionnement d'un masque sur le porte-segments, et
- une étape de dépôt localisé d'un revêtement de surface réducteur de frottement à travers le masque, au moins sur l'au moins un cordon de contact.

L'invention a également pour objet un procédé de mise en œuvre d'une machine thermique telle que mentionnée ci-dessus, caractérisé en ce que la jupe et l'au moins un cordon de contact comportant le revêtement de surface réducteur de frottement constituent les zones d'appui du piston dans la contre-pièce.

L'invention sera mieux comprise à la lecture de la description qui va suivre, donnée uniquement à titre d'exemple non limitatif et faite en référence aux dessins annexés sur lesquels :
- la figure 1 est une vue de côté, avec section partielle, d'un piston conforme à l'invention, du type piston court, où le deuxième cordon constitue un cordon de contact comportant un revêtement de surface ;
- la figure 2 est une vue en perspective du piston de la figure 1 ;
- la figure 3 est une coupe partielle à plus grand échelle du porte-segments, montrant le deuxième cordon ayant un diamètre supérieur à la jupe, ainsi qu'au premier et troisième cordon ;
- la figure 4 est une coupe partielle à plus grand échelle du deuxième cordon, montrant une variante dans laquelle le deuxième cordon comporte une sous-couche formée sous le revêtement de surface ;
- la figure 5 est une vue en perspective montrant un masque prévu pour recouvrir le piston lors du dépôt du revêtement de surface ;
- la figure 6 est une coupe du masque dans le plan transversal défini par la ligne VI-VI à la figure 5 ;
- les figures 7, 8 et 9 sont des coupes analogues à la figure 6, montrant des variantes de masque ;
- la figure 10 est une vue analogue à la figure 5, montrant une autre variante de masque ;
- les figures 11 à 14 sont des coupes partielles analogues à la figure 3, montrant différentes variantes de piston ;
- la figure 15 est une vue en perspective analogue à la figure 2, montrant une variante dans laquelle le porte-segments comporte seulement deux cordons ; et
- la figure 16 est une vue analogue à la figure 2, montrant une variante dans laquelle le piston est du type piston long.

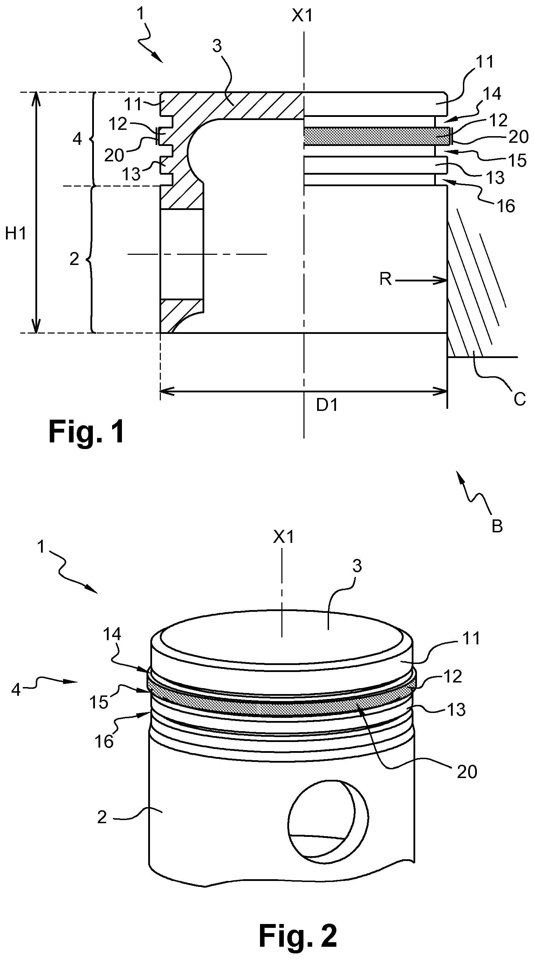

Sur les figures 1 à 3 est représenté un piston 1 conforme à l'invention.

Le piston 1 est prévu pour équiper un moteur thermique, plus précisément un moteur à mouvement alternatif et combustion interne. Le piston 1 est disposé dans une chemise C d'un bloc-cylindres B, partiellement représentés uniquement à la figure 1 dans un but de simplification. De préférence, la chemise C comporte un revêtement de surface R réducteur de frottement en carbone amorphe type DLC.

Le piston 1 est en matériau métallique, de préférence en acier, en alliage d'aluminium, ou formé par assemblage de pièces en différents matériaux métalliques.

Le piston 1 présente un axe central longitudinal X1, une hauteur H1 définie parallèlement à l'axe X1 et un diamètre D1 défini radialement à l'axe X1. Le piston 1 est un piston court, présentant une hauteur H1 inférieure à son diamètre D1.

Le piston 1 comprend une jupe 2, une tête 3 et un porte-segments 4. Le piston 1 est prévu pour recevoir des segments, non représentés dans un but de simplification.

Au sein du moteur, le piston 1 est animé d'un mouvement de translation alternatif suivant l'axe X1 dans la contre-pièce formée par la chemise C.

Plus précisément, le piston 1 se déplace dans la chemise C selon un mouvement principal de translation selon l'axe X1, et des mouvements secondaires qui peuvent se résumer par un mouvement latéral perpendiculaire à l'axe X1 et un mouvement de rotation autour d'un axe perpendiculaire à l'axe X1 (mouvement de basculement).

Il s'ensuit un guidage du piston 1 dans la chemise C grâce à un contact entre sa jupe 2 et la chemise C, contact qui peut être plus marqué entre la chemise C et l'extrémité inférieure de la jupe 2. Le mouvement de basculement et les déformations de la jupe 3 entraînent en plus un contact entre la chemise C et la tête 3 et/ou le porte-segments 4 du piston 1 côté basculement.

La jupe 2 est constituée par une paroi globalement tubulaire centrée sur l'axe X1, ayant un diamètre externe D2. La jupe 2 est prévue pour guider le piston 1 dans la chemise C, et constitue une première zone d'appui Z2 du piston 1 dans la chemise C. La jupe 2 comporte de préférence un revêtement de surface réducteur de frottement.

De préférence, le revêtement de la jupe 2 est en carbone amorphe type DLC.

En alternative, le revêtement de la jupe 2 peut être en graphite ou tout autre matériau adapté à l'application visée.

La tête 3 est constituée par une paroi qui s'étend transversalement à l'axe X1. La tête 3 est prévue pour être disposée au contact des gaz de combustion, et recevoir les efforts dus à ladite combustion.

Sur l'exemple des figures, la tête 3 est constituée par une paroi plane. En alternative, la tête 3 peut être constituée par une paroi creuse, comportant une cavité borgne ouverte du côté extérieur.

Le porte-segments 4 est situé entre la jupe 2 et la tête 3. Le porte-segments 4 comprend trois cordons 11, 12 et 13, ainsi que trois gorges 14, 15 et 16 prévues pour recevoir des segments. Chaque cordon 11, 12 et 13 est constitué par une surface cylindrique. Chaque gorge 14, 15 et 16 est constituée par une surface cylindrique en retrait par rapport aux cordons voisins, ainsi que deux surfaces planes annulaires reliées aux cordons voisins.

Le premier cordon 11 est situé au voisinage immédiat de la tête 3, en contact avec les gaz et le feu.

Le deuxième cordon 12 est situé dans la partie intermédiaire du porte-segments 4 entre la jupe 2 et la tête 3, en étant légèrement plus rapproché de la tête 3.

Le troisième cordon 13 est situé à proximité de la jupe 2.

La gorge 14 est située entre les cordons 11 et 12. La gorge 14 est prévue pour recevoir le segment de feu, en contact avec les gaz et le feu.

La gorge 15 est située entre les cordons 12 et 13. La gorge 15 est prévue pour recevoir le segment d'étanchéité, assurant l'étanchéité totale des gaz, en bloquant ceux qui auraient passé le segment de feu.

La gorge 16 est située entre le cordon 13 et la jupe 2. La gorge 16 est prévue pour recevoir le segment racleur, assurant le raclage du lubrifiant à la surface de la chemise C.

Dans les nouveaux concepts d'attelage mobile, le porte-segment 4 est susceptible de devenir une deuxième zone d'appui Z4 du piston 1 dans la chemise C, autrement dit une deuxième zone de contact et de frottement du piston 1 avec la chemise C.

Dans le mode de réalisation de l'invention illustré aux figures 1 à 3, le cordon 12 a un diamètre D12 supérieur à un diamètre D2 minimal de la jupe 2. Ainsi, le cordon 12 est un cordon de contact constituant la deuxième zone d'appui Z4 du piston 1 dans la chemise C, en complément de la première zone d'appui Z2 constituée par la jupe 2. De préférence, le diamètre D12 est supérieur au diamètre D2 moyen de la jupe 2, qui est susceptible de se déformer en fonctionnement. Par exemple, le diamètre D12 peut être supérieur de 10 à 50 µm au diamètre D2.

En outre, le cordon 12 comporte un revêtement de surface 20 réducteur de frottement, formé sur un secteur couvrant un angle de 360 degrés autour de l'axe X1. Autrement dit, le revêtement 20 est déposé sur toute la circonférence du cordon 12. Le revêtement 20 permet de réduire le coefficient de frottement entre le cordon 12 et la chemise C, en contact et en mouvement l'une par rapport à l'autre. En outre, le revêtement 20 permet de réduire fortement l'usure et/ou le risque de grippage.

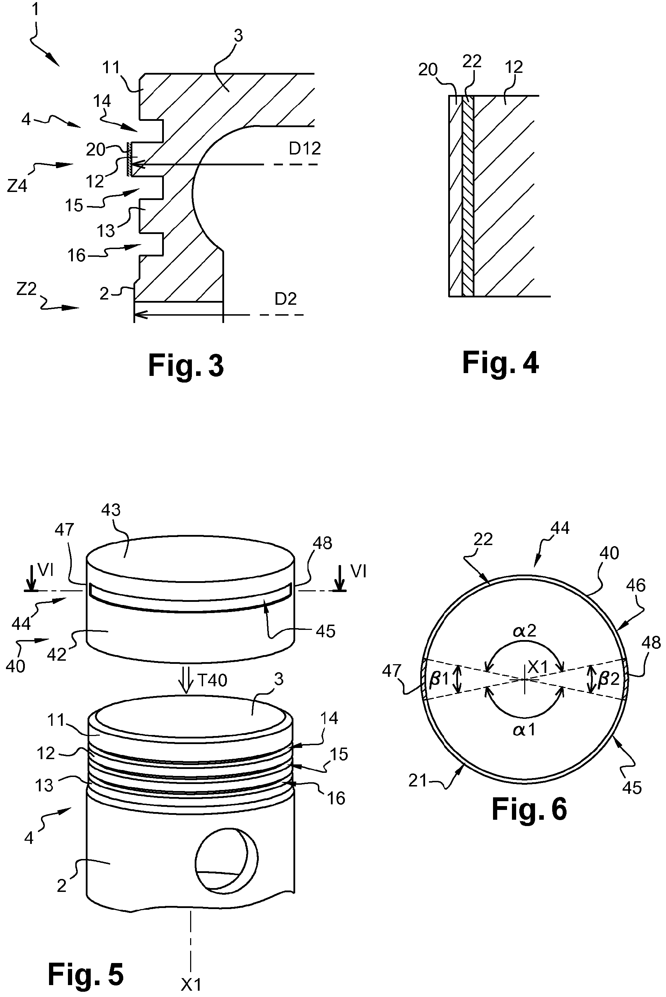

Comme montré à la figure 3, le diamètre D12 du cordon 12 est considéré sans le revêtement 20. Pour sa part, le diamètre D2 de la jupe 2 est considéré sans les alésages et renfoncements.

Plus généralement, dans le cadre de l'invention, le piston 1 comprend au moins un cordon de contact ayant un diamètre supérieur au diamètre externe minimal de la jupe et comportant un revêtement réducteur de frottement formée au moins sur un secteur radial couvrant un angle d'au moins 30 degrés, et jusque sur un unique secteur couvrant un angle de 360 degrés. Autrement dit, le revêtement s'étend autour de l'axe X1 au moins sur un secteur radial à 30 degrés, au plus sur un secteur à 360 degrés, et peut s'étendre sur plusieurs secteurs radiaux couvrant chacun un angle d'au moins 30 degrés.

Dans le mode de réalisation des figures 1 à 3, le revêtement 20 est formé uniquement à la surface du cordon 12, sans déborder dans les gorges voisines 14 et 15. En effet, pour certaines applications et/ou pour certains matériaux, le revêtement 20 présent dans les gorges pourrait être soumis à un phénomène d'arrachement, générant une pollution au contact entre le porte-segments 4 et la chemise C.

En alternative, le revêtement 20 peut être formé à la surface du cordon 12 et dans les gorges voisines 14 et 15. Dans ce cas, le dépôt du revêtement 20 est simplifié.

En outre, le revêtement 20 est formé sur toute la hauteur du cordon 12, définie parallèlement à l'axe X1.

En alternative, le revêtement 20 peut être formé seulement sur une partie de la hauteur du cordon 12, notamment en son centre. Cela permet d'éviter tout débordement du revêtement 20 dans les gorges 14 et 15, lors de son dépôt sur le cordon 12.

Le revêtement 20 a une rugosité maximale Rz inférieure ou égale à 2 µm, de préférence inférieure ou égale à 0,5 µm, obtenue par exemple par polissage ou ponçage.

Le revêtement 20 a une épaisseur, définie radialement à l'axe X1, de préférence égale à 2 µm. En alternative, cette épaisseur peut être comprise entre 1 et 5 µm, et de préférence entre 2 et 3 µm. L'épaisseur du revêtement 20 peut notamment varier en fonction du diamètre D1. Par exemple, dans le cas où le piston 1 équipe un moteur de véhicule poids lourd, il est envisageable que cette épaisseur aille jusqu'à 10 µm. De préférence, le revêtement 20 a une épaisseur constante, définie radialement à l'axe X1.

En pratique, dans la zone d'appui Z4, le cordon 12 peut frotter contre la chemise C sur un seul secteur radial, et non sur toute sa circonférence. Ainsi, il est suffisant de déposer le revêtement 20 sur un unique secteur radial, couvrant un angle d'au moins 30 degrés.

En alternative, dans la zone d'appui Z4, le cordon 12 peut frotter contre la chemise C dans deux portions diamétralement opposées. Dans ce cas, il est suffisant de déposer le revêtement 20 sur deux secteurs radiaux diamétralement opposés du cordon 12, couvrant chacun un angle d'au moins 30 degrés.

Selon d'autres alternatives, le revêtement 20 peut être déposé sur un ou deux secteurs radiaux du cordon 12, couvrant chacun un angle limité à 45, 60, 90 ou 120 degrés, autour de l'axe X1.

Le revêtement 20 présente un coefficient de frottement inférieur au matériau constitutif du porte-segments 4. Ainsi, les frottements entre la chemise C et le cordon 12 pourvu du revêtement 20 est réduit, en comparaison avec un cordon 12 dépourvu de revêtement 20.

De préférence, le revêtement 20 est en carbone amorphe type DLC. Autrement dit, le revêtement 20 est une couche de carbone hybridé en sp² ou sp3, avec ou sans hydrogène. Par exemple, le revêtement 20 peut être composé de ta-C, a-C:H ou ta-C:H. Encore de préférence, le revêtement 20 est en a-C:H.

En alternative, le revêtement 20 peut être en graphite ou tout autre matériau adapté à l'application visée. De préférence, le revêtement 20 est homogène.

Sur la figure 4, le deuxième cordon 12 comporte une sous-couche 22 formée sous le revêtement de surface 20. Par exemple, cette sous-couche 22 comporte une base Cr et/ou W et/ou Ni.

Sur les figures 5 et 6 est illustré un exemple de procédé de revêtement d'un piston 1 conforme à l'invention, visant à déposer le revêtement 20 sur le cordon 12.

Le procédé comprend au moins une étape de positionnement d'un masque 40 sur le piston 1, puis une étape de dépôt du revêtement 20 sur le cordon 12 à travers le masque 40. Le procédé peut comporter d'autres étapes sans sortir du cadre de l'invention.

Le masque 40 est positionné sur le piston 1 selon un mouvement de translation T40 dirigé suivant l'axe X1, comme illustré par une flèche à la figure 5. Le masque 40 recouvre alors au moins en partie le piston 1, lors du dépôt du revêtement 20.

Le masque 40 comprend une partie tubulaire 42 et une partie plane 43. Lorsque le masque 40 est positionné sur le piston 1, la partie 42 recouvre le porte-segments 4, tandis que la partie 43 recouvre la tête 3.

Dans la partie plane 42, une portion intermédiaire 44 comprend deux fentes 45 et 46 diamétralement opposées, ainsi que deux zones de jonction 47 et 48 diamétralement opposées. Les fentes 45 et 46 formées à travers le masque 40 permettent le dépôt du revêtement 20 sur le cordon 12. Les zones 47 et 48 permettent de relier les parties 42 et 43.

Comme montré à la figure 6, lorsque le masque 40 est positionné sur le piston 1, la fente 45 définit un secteur d'angle α1 correspondant au secteur radial 21 du revêtement 20, la fente 46 définit un secteur d'angle α2 correspondant au secteur radial 22 du revêtement 20, la zone 47 définit un secteur d'angle β1 et la zone 48 définit un secteur d'angle β2, autour de l'axe X1.

La géométrie de la portion 44 du masque 40 détermine la géométrie du revêtement 20. En particulier, la géométrie des fentes 45 et 46 détermine l'étendue des secteurs 21 et 22 du revêtement 20 formé sur le cordon 12.

Sur l'exemple de la figure 6, les angles α1 et α2 mesurent chacun 156 degrés. En alternative, les angles α1 et α2 peuvent présenter des valeurs différentes, en fonction de l'étendue souhaitée pour les secteurs 21 et 22.

Toujours sur l'exemple de la figure 6, les angles α1 et α2 sont identiques, de même les angles β1 et β2 sont identiques, néanmoins il est envisageable de prévoir des angles différents pour définir des secteurs 21 et 22 différents.

Ainsi, le masque 40 permet d'isoler les parties du piston 1 qu'il n'est pas prévu de revêtir, et de limiter le dépôt de revêtement 20 aux portions souhaitées du cordon 12 et à la jupe 3.

Le matériau du masque 40 peut être choisi selon la technique de dépôt du revêtement 20. Par exemple, le masque 40 peut être réalisé en acier ou en aluminium.

A titre d'exemple non limitatif, l'étape de dépôt du revêtement 20 peut être réalisée selon les enseignements du document WO2012/156647.

Selon la forme du piston 1, la nature des matériaux du piston 1 et de la chemise C, et la nature du contact, le frottement piston 1 / chemise C représente 20 à 30% des pertes par frottement moteur.

Ainsi, le dépôt d'un revêtement sur la jupe 2 et le cordon 12 peut être valorisé en terme de diminution de frottements, et donc de consommation de carburant et d'émission de CO2.

En première approche, la nouvelle géométrie des pistons devrait conduire à attribuer entre 5 et 10% des pertes par frottement moteur au contact entre le cordon 12 et la chemise C. Dans ces conditions, le revêtement 20 appliqué sur le cordon 12 devrait permettre de diminuer les pertes par frottement moteur de l'ordre de 2 à 5%.

Avantageusement, le procédé de revêtement du piston 1 peut comporter les étapes suivantes, prises isolément ou en combinaison.

Avant l'étape de positionnement du masque 40, le procédé peut comporter une étape de préparation de la surface du deuxième cordon 12, par exemple par usinage ou polissage.

Avant l'étape de dépôt du revêtement 20, généralement avant l'étape de positionnement du masque 40, le procédé peut comporter une étape de lavage du piston 1, et en particulier lavage du cordon 12 destiné à recevoir le revêtement 20.

Après l'étape de dépôt du revêtement 20, le procédé peut comporter une étape de finition de la surface externe du revêtement 20, par exemple par polissage.

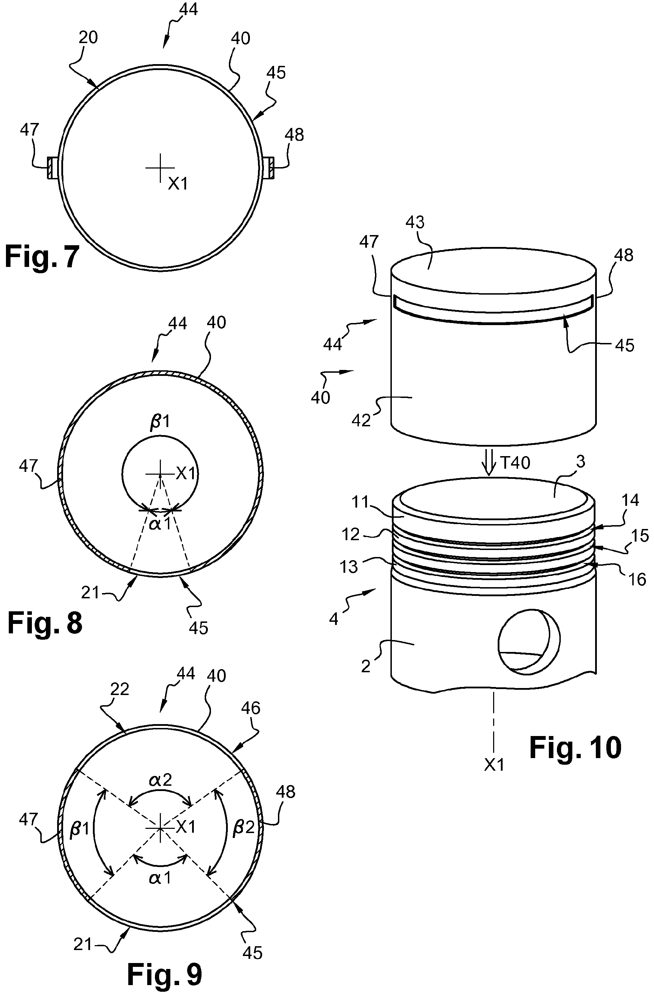

Des variantes de masques 40 pour la fabrication d'un piston 1 conforme à l'invention sont montrés aux figures 7 à 10. Dans un but de simplification, les éléments constitutifs de ces masques 40 comparables au masque 40 des figures 5 et 6 portent les mêmes références numériques, et seules les différences sont détaillées ci-après.

Sur la figure 7, les zones de jonction 47 et 48 sont décalées radialement par rapport au reste du masque 40. Ainsi, le masque 40 comporte une unique fente 45 permettant de former le revêtement 20 sur un secteur à 360 degrés autour de l'axe X1, comme pour le piston 1 des figures 1 à 3.

Sur la figure 8, le masque 40 comporte une unique fente 45 présentant un angle α1 de 30 degrés. Ainsi, le masque 40 permet de déposer le revêtement sur un unique secteur radial 21 limité à 30 degrés.

Sur la figure 9, l'angle α1 mesure 90 degrés, tandis que l'angle α2 mesure 110 degrés. Les fentes 45 et 46 ont des géométries différentes.

Sur la figure 10, la partie tubulaire 42 est plus allongée de manière à recouvrir la jupe 2. Ainsi, la jupe 2 peut recevoir un revêtement différent du cordon 12, ou être dépourvue de revêtement.

En alternative, la partie tubulaire 42 peut être plus ou moins allongée, et donc recouvrir une hauteur plus ou moins importante de la jupe 2.

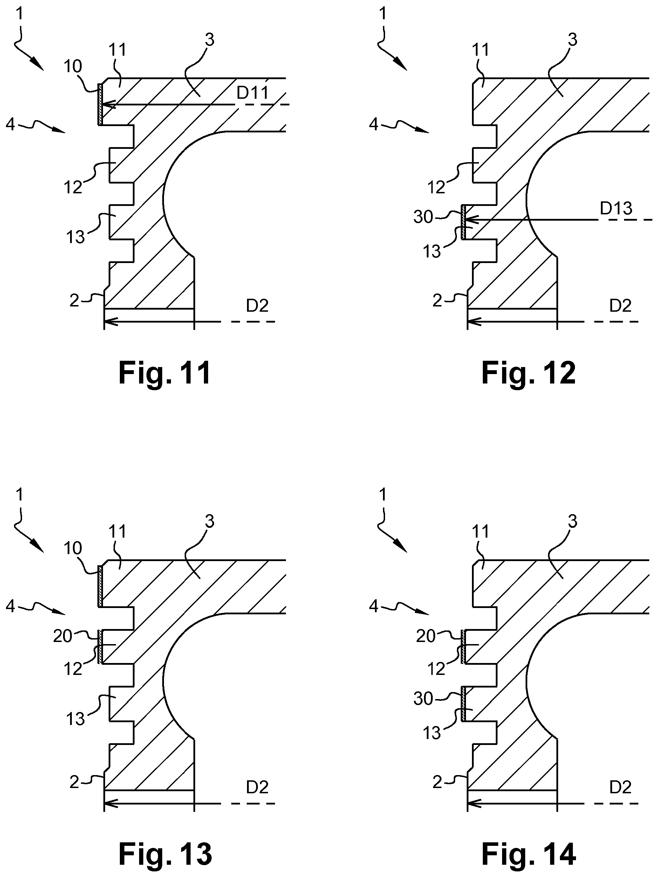

D'autres modes de réalisation d'un piston 1 conforme à l'invention sont montrés aux figures 11 à 16. Dans un but de simplification, les éléments constitutifs du piston 1 comparables à ceux du premier de réalisation décrit plus haut portent les mêmes références numériques, et seules les différences sont détaillées ci-après.

Sur la figure 11, le premier cordon 11 est le cordon de contact ayant un diamètre D11 supérieur au diamètre D2 minimal de la jupe 2 et pourvu d'un revêtement 10 réducteur de frottement.

Sur la figure 12, le troisième cordon 13 est le cordon de contact ayant un diamètre D13 supérieur au diamètre D2 minimal de la jupe 2 et pourvu d'un revêtement 30 réducteur de frottement.

Sur la figure 13, le premier cordon 11 et le deuxième cordon 12 sont les cordons de contact ayant des diamètres D11 et D12 supérieurs au diamètre D2 minimal de la jupe 2 et pourvus de revêtements 10 et 20 réducteurs de frottement.

Dans ce cas, le masque 40 utilisé lors du dépôt des revêtements 10 et 20 peut comporter deux portions 44 superposées, munies de fentes 45 et 46. En alternative, les revêtements 10 et 20 peuvent être déposés successivement en utilisant deux masques 40 différents.

De préférence, le revêtement 10 est constitué du même matériau que le revêtement 20.

Optionnellement, le cordon 11 peut comporter au moins une sous-couche formée sous le revêtement 10, comme pour le revêtement 20.

Sur la figure 14, le deuxième cordon 12 et le troisième cordon 13 sont les cordons de contact ayant des diamètres D12 et D13 supérieurs au diamètre D2 minimal de la jupe 2 et pourvus de revêtements 20 et 30 réducteurs de frottement.

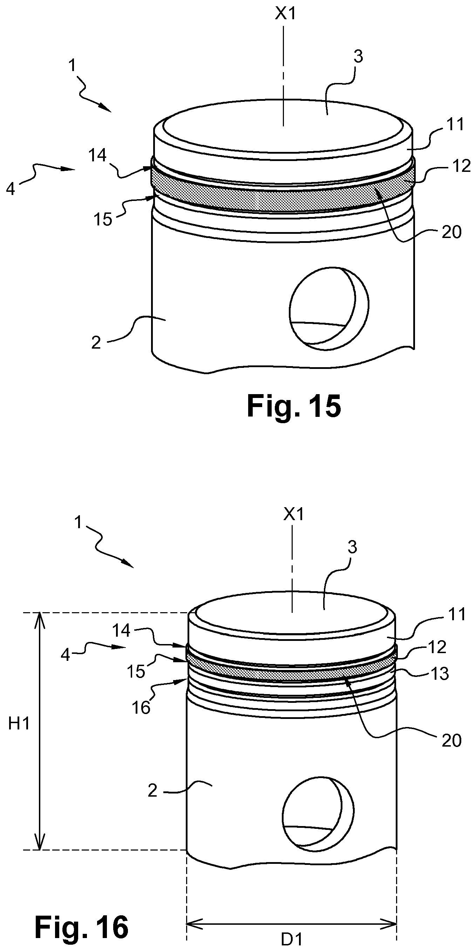

Sur la figure 15, le porte-segments 4 comporte uniquement deux cordons 11 et 12, et pas de cordon 13. Seul le deuxième cordon 12 est pourvu d'un revêtement 20 réducteur de frottement. Le porte-segments 4 reçoit un segment de feu et d'étanchéité dans la gorge 14 et un segment racleur dans la gorge 15.

Sur la figure 16, le piston 1 est un piston long, présentant une hauteur H1 supérieure à son diamètre D1.

En alternative, le piston 1 peut présenter une hauteur H1 égale au diamètre D1 sans sortir du cadre de l'invention.

Par ailleurs, le piston 1 et le masque 40 peuvent être conformés différemment des figures 1 à 16 sans sortir du cadre de l'invention. En outre, les caractéristiques techniques des différents modes de réalisation et variantes mentionnés ci-dessus peuvent être, en totalité ou pour certaines d'entre elles, combinées entre elles. Ainsi, le piston 1 peut être adapté en termes de coût, de fonctionnalités et de performance.

## Revendications

1. Piston (1) de moteur thermique, comprenant :
- une jupe (2) qui est prévue pour guider le piston (1) en translation suivant un axe central (X1) dans une contre-pièce (C) et constitue une première zone d'appui (Z2) du piston (1) dans la contre-pièce (C),
- une tête (3) qui s'étend transversalement à l'axe central (X1) et est prévue pour être disposée au contact des gaz de combustion, et
- un porte-segments (4) qui comprend au moins deux cordons (11, 12, 13 ; 11, 12) et au moins deux gorges (14, 15, 16 ; 14, 15) prévues pour recevoir des segments, incluant un premier cordon (11) jouxtant la tête (3) et un deuxième cordon (12) situé entre le premier cordon (11) et la jupe (2),
**caractérisé en ce que** les cordons (11, 12, 13 ; 11, 12) incluent au moins un cordon de contact (12 ; 11 ; 13 ; 11, 12 ; 12, 13) ayant un diamètre (D12 ; D11 ; D13 ; D11, D12 ; D12, D13) supérieur à un diamètre (D2) minimal de la jupe (2) afin de constituer une deuxième zone d'appui (Z4) du piston (1) dans la contre-pièce (C),
et **en ce que** l'au moins un cordon de contact (12 ; 11 ; 13 ; 11, 12 ; 12, 13) comporte un revêtement de surface (20 ; 10 ; 30 ; 10, 20 ; 20, 30) réducteur de frottement, formé au moins sur un secteur radial (21 ; 22) couvrant un angle (α1 ; α2) d'au moins 30 degrés, et jusque sur un unique secteur couvrant un angle de 360 degrés,
le diamètre dudit cordon de contact étant considéré sans le revêtement, et le diamètre de la jupe étant considéré sans alésages ni renfoncements.

2. Piston (1) selon la revendication 1, **caractérisé en ce que** l'au moins un cordon de contact (12 ; 11 ; 13 ; 11, 12 ; 12, 13) a un diamètre (D12 ; D11 ; D13 ; D11, D12 ; D12, D13) supérieur à un diamètre (D2) moyen de la jupe (2).

3. Piston (1) selon l'une des revendications 1 ou 2, le piston (1) est un piston court, présentant une hauteur (H1) inférieure à son diamètre (D1).

4. Piston (1) selon l'une des revendications 1 à 3, **caractérisé en ce que** le matériau de base du piston (1) est l'acier.

5. Piston (1) selon l'une des revendications 1 à 4, **caractérisé en ce que** le revêtement de surface (20 ; 10 ; 30 ; 10, 20 ; 20, 30) réducteur de frottement est en carbone amorphe type DLC a-C:H.

6. Piston (1) selon l'une des revendications 1 à 4, **caractérisé en ce que** le revêtement de surface (20 ; 10 ; 30 ; 10, 20 ; 20, 30) réducteur de frottement est en carbone amorphe type DLC ta-C.

7. Piston (1) selon l'une des revendications 1 à 6, **caractérisé en ce que** l'au moins un cordon de contact (12 ; 11 ; 13 ; 11, 12 ; 12, 13) comporte au moins une sous-couche (22) formée sous le revêtement de surface (20 ; 10 ; 30 ; 10, 20 ; 20, 30) réducteur de frottement.

8. Piston (1) selon l'une des revendications 1 à 7, **caractérisé en ce que** le deuxième cordon (12) a un diamètre supérieur au premier cordon (11).

9. Piston (1) selon l'une des revendications 1 à 8, **caractérisé en ce que** parmi les cordons (11, 12, 13 ; 11, 12) du porte-segments (4), seul le ou les cordons de contact (12 ; 11 ; 13 ; 11, 12 ; 12, 13) comportent un revêtement de surface (20 ; 10 ; 30 ; 10, 20 ; 20, 30) réducteur de frottement.

10. Piston (1) selon l'une des revendications 1 à 9, **caractérisé en ce que** le porte-segments (4) comprend un unique cordon de contact (12 ; 11 ; 13)

11. Piston (1) selon la revendication 10, **caractérisé en ce que** l'unique cordon de contact est le deuxième cordon (12).

12. Piston (1) selon l'une des revendications 1 à 9, **caractérisé en ce que** le porte-segments (4) comprend deux cordons de contact (11, 12 ; 12, 13).

13. Piston (1) selon la revendication 12, **caractérisé en ce que** les deux cordons de contact sont le deuxième cordon (12) et un troisième cordon (13).

14. Piston (1) selon la revendication 12, **caractérisé en ce que** les deux cordons de contact sont le premier cordon (11) et le deuxième cordon (12).

15. Machine thermique, comprenant :
- un piston (1) selon l'une des revendications 1 à 14, et
- une contre-pièce (C) recevant le piston (1).

16. Machine thermique selon la revendication 15, **caractérisée en ce que** la contre-pièce (C) comporte un revêtement de surface (R) réducteur de frottement en carbone amorphe type DLC.

17. Procédé de revêtement d'un piston (1) selon l'une des revendications 1 à 14, **caractérisé en ce que** le procédé comprend les étapes suivantes :
- une étape de positionnement d'un masque (40) sur le piston (1), et
- une étape de dépôt localisé d'un revêtement de surface (20 ; 10 ; 30 ; 10, 20 ; 20, 30) réducteur de frottement à travers le masque (40), au moins sur l'au moins un cordon de contact (12 ; 11 ; 13 ; 11, 12 ; 12, 13).

18. Procédé de mise en œuvre d'une machine thermique selon l'une des revendications 15 ou 16, **caractérisé en ce que** la jupe (2) et l'au moins un cordon de contact (12 ; 11 ; 13 ; 11, 12 ; 12, 13) comportant le revêtement de surface (10 ; 30 ; 10, 20 ; 20, 30) réducteur de frottement constituent les zones d'appui (Z2 ; Z4) du piston (1) dans la contre-pièce (C).

## Patentansprüche

1. Kolben (1) für eine Brennkraftmaschine, umfassend:
- einen Kolbenschaft (2), der dazu vorgesehen ist, den Kolben (1) entlang einer Zentralachse (X1) in einem Gegenstück (C) translatorisch zu führen und einen ersten Anlagebereich (Z2) des Kolbens (1) im Gegenstück (C) bildet,
- einen Kolbenkopf (3), der sich quer zur Zentralachse (X1) erstreckt und dazu vorgesehen ist, mit den Verbrennungsgasen in Kontakt zu stehen, und
- einen Ringträger (4), der mindestens zwei Stege (11, 12, 13; 11, 12) und mindestens zwei zur Aufnahme von Kolbenringen vorgesehene Nuten (14, 15, 16; 14, 15) umfasst, einschließlich eines ersten Stegs (11), der an den Kolbenkopf (3) angrenzt, und eines zweiten Stegs (12), der zwischen dem ersten Steg (11) und dem Kolbenschaft (2) angeordnet ist,
**dadurch gekennzeichnet, dass** die Stege (11, 12, 13; 11, 12) mindestens einen Kontaktsteg (12; 11; 13; 11, 12; 12, 13) umfassen, der einen Durchmesser (D12; D11; D13; D11, D12; D12, D13) aufweist, der größer ist als ein Mindestdurchmesser (D2) des Kolbenschafts (2), um einen zweiten Anlagebereich (Z4) des Kolbens (1) im Gegenstück (C) zu bilden,
**und dass** der mindestens eine Kontaktsteg (12; 11; 13; 11, 12; 12, 13) eine reibungsmindernde Oberflächenbeschichtung (20; 10; 30; 10, 20; 20, 30) umfasst, die mindestens auf einem radialen Sektor (21; 22) ausgebildet ist, der einen Winkel (α1; α2) von mindestens 30 Grad überdeckt, und bis hin zu einem einzigen Sektor, der einen Winkel von 360 Grad überdeckt,
wobei der Durchmesser des genannten Kontaktstegs ohne die Beschichtung betrachtet wird und der Durchmesser des Kolbenschafts ohne jegliche Bohrung und ohne jegliche Verstärkungen betrachtet wird.

2. Der Kolben (1) nach Anspruch 1, **dadurch gekennzeichnet, dass** mindestens ein Kontaktsteg (12; 11; 13; 11, 12; 12, 13) einen Durchmesser (D12; D11; D13; D11, D12; D12, D13) aufweist, der größer ist als ein mittlerer Durchmesser (D2) des Kolbenschafts (2).

3. Der Kolben (1) nach einem der Ansprüche 1 oder 2, **dadurch gekennzeichnet, dass** der Kolben (1) ein Kurzkolben ist, dessen Höhe (H1) kleiner ist als sein Durchmesser (D1).

4. Der Kolben (1) nach einem der Ansprüche 1 bis 3, **dadurch gekennzeichnet, dass** das Grundmaterial des Kolbens (1) Stahl ist.

5. Der Kolben (1) nach einem der Ansprüche 1 bis 4, **dadurch gekennzeichnet, dass** die reibungsmindernde Oberflächenbeschichtung (20; 10; 30; 10, 20; 20, 30) aus amorphem Kohlenstoff des DLC-Typs a-C:H besteht.

6. Der Kolben (1) nach einem der Ansprüche 1 bis 4, **dadurch gekennzeichnet, dass** die reibungsmindernde Oberflächenbeschichtung (20; 10; 30; 10, 20; 20, 30) aus amorphem Kohlenstoff des DLC-Typs ta-C besteht.

7. Der Kolben (1) nach einem der Ansprüche 1 bis 6, **dadurch gekennzeichnet, dass** der mindestens eine Kontaktsteg (12; 11; 13; 11, 12; 12, 13) mindestens eine Unterschicht (22) umfasst, die unterhalb der reibungsmindernden Oberflächenbeschichtung (20; 10; 30; 10, 20; 20, 30) ausgebildet ist.

8. Der Kolben (1) nach einem der Ansprüche 1 bis 7, **dadurch gekennzeichnet, dass** der zweite Steg (12) einen größeren Durchmesser aufweist als der erste Steg (11).

9. Der Kolben (1) nach einem der Ansprüche 1 bis 8, **dadurch gekennzeichnet, dass** unter den Stegen (11, 12, 13; 11, 12) des Ringträgers (4) ausschließlich der bzw. die Kontaktstege (12; 11; 13; 11, 12; 12, 13) eine reibungsmindernde Oberflächenbeschichtung (20; 10; 30; 10, 20; 20, 30) aufweisen.

10. Der Kolben (1) nach einem der Ansprüche 1 bis 9, **dadurch gekennzeichnet, dass** der Ringträger (4) einen einzigen Kontaktsteg (12; 11; 13) umfasst.

11. Der Kolben (1) nach Anspruch 10, **dadurch gekennzeichnet, dass** der einzige Kontaktsteg der zweite Steg (12) ist.

12. Der Kolben (1) nach einem der Ansprüche 1 bis 9, **dadurch gekennzeichnet, dass** der Ringträger (4) zwei Kontaktstege (11, 12; 12, 13) umfasst.

13. Der Kolben (1) nach Anspruch 12, **dadurch gekennzeichnet, dass** die beiden Kontaktstege der zweite Steg (12) und ein dritter Steg (13) sind.

14. Der Kolben (1) nach Anspruch 12, **dadurch gekennzeichnet, dass** die beiden Kontaktstege der erste Steg (11) und der zweite Steg (12) sind.

15. Brennkraftmaschine, umfassend:
- einen Kolben (1) nach einem der Ansprüche 1 bis 14; und
- ein Gegenstück (C), das den Kolben (1) aufnimmt.

16. Die Brennkraftmaschine nach Anspruch 15, **dadurch gekennzeichnet, dass** das Gegenstück (C) eine reibungsmindernde Oberflächenbeschichtung (R) aus amorphem Kohlenstoff des DLC-Typs umfasst.

17. Verfahren zum Beschichten eines Kolbens (1) nach einem der Ansprüche 1 bis 14, **dadurch gekennzeichnet, dass** das Verfahren die folgenden Schritte umfasst:
- einen Schritt zum Positionieren einer Maske (40) auf dem Kolben (1), und
- einen Schritt zum lokalen Aufbringen einer reibungsmindernden Oberflächenbeschichtung (20; 10; 30; 10, 20; 20, 30) durch die Maske (40), zumindest auf dem mindestens einen Kontaktsteg (12; 11; 13; 11, 12; 12, 13).

18. Verfahren zum Betreiben einer Brennkraftmaschine nach einem der Ansprüche 15 oder 16, **dadurch gekennzeichnet, dass** der Kolbenschaft (2) und der mindestens eine Kontaktsteg (12; 11; 13; 11, 12; 12, 13), der die reibungsmindernde Oberflächenbeschichtung (10; 30; 10, 20; 20, 30) umfasst, die Anlagebereiche (Z2; Z4) des Kolbens (1) im Gegenstück (C) bilden.

## Claims

1. Combustion engine piston (1), comprising:
- a skirt (2) for guiding the piston (1) in translation along a central axis (X1) in a counter-part (C) and consisting of a first contact area (Z2) of the piston (1) in the counter-part (C),
- a head (3) which extends transverse to the central axis (X1) and is intended to be arranged in contact with the combustion gases, and
- a ring carrier (4) which comprises at least two lands (11, 12, 13; 11, 12) and at least two grooves (14, 15, 16; 14, 15) intended for receiving the rings, including a first land (11) adjoining the head (3) and a second land (12) situated between the first land (11) and the skirt (2),
**characterized in that** the lands (11, 12, 13; 11, 12) include at least one contact land (12; 11; 13; 11, 12; 12, 13) having a diameter (D12; D11; D13; D11, D12; D12, D13) greater than a minimum diameter (D2) of the skirt (2) in order to form a second contact area (Z4) of the piston (1) in the counter-part (C),
and **in that** the at least one contact land (12; 11; 13; 11, 12; 12, 13) comprises a friction-reducing surface coating (20; 10; 30; 10, 20; 20, 30), formed at least on a radial sector (21; 22) covering an angle (α1; α2) of at least 30 degrees, and up to on a single sector covering an angle of 360 degrees, the diameter of the said one contact land being considered without the coating, and the diameter of the skirt being considered without any bore and without any reinforcements.

2. The piston (1) according to claim 1, **characterized in that** at least one contact land (12; 11; 13; 11, 12; 12, 13) has a diameter (D12; D11; D13; D11, D12; D12, D13) greater than an average diameter (D2) of the skirt (2).

3. The piston (1) according to one of claims 1 or 2, the piston (1) is a short piston, having a height (H1) smaller than its diameter (D1).

4. The piston (1) according to one of claims 1 to 3, **characterized in that** the base material of the piston (1) is steel.

5. The piston (1) according to one of claims 1 to 4, **characterized in that** the friction-reducing surface coating (20; 10; 30; 10, 20; 20, 30) is made from DLC-type amorphous carbon a-C:H.

6. The piston (1) according to one of claims 1 to 4, **characterized in that** the friction-reducing surface coating (20; 10; 30; 10, 20; 20, 30) is made from DLC-type amorphous carbon ta-C.

7. The piston (1) according to one of claims 1 to 6, **characterized in that** the at least one contact land (12; 11; 13; 11, 12; 12, 13) includes at least one sublayer (22) formed below the friction-reducing surface coating (20; 10; 30; 10, 20; 20, 30).

8. The piston (1) according to one of claims 1 to 7, **characterized in that** the second land (12) has a diameter larger than the first land (11).

9. The piston (1) according to one of claims 1 to 8, **characterized in that** among the lands (11, 12, 13; 11, 12) of the ring carrier (4), only the contact land(s) (12; 11; 13; 11, 12; 12, 13) include a friction-reducing surface coating (20; 10; 30; 10, 20; 20, 30).

10. The piston (1) according to one of claims 1 to 9, **characterized in that** the ring carrier (4) comprises a single contact land (12; 11; 13).

11. The piston (1) according to claim 10, **characterized in that** the single contact land is the second land (12).

12. The piston (1) according to one of claims 1 to 9, **characterized in that** the ring carrier (4) comprises two contact lands (11, 12; 12, 13).

13. The piston (1) according to claim 12, **characterized in that** the two contact lands are the second land (12) and a third land (13).

14. The piston (1) according to claim 12, **characterized in that** the two contact lands are the first land (11) and the second land (12).

15. A heat engine, comprising:
- a piston (1) according to one of claims 1 to 14; and
- a counter-part (C) receiving the piston (1).

16. The heat engine according to claim 15, **characterized in that** the counter-part (C) includes a friction-reducing surface coating (R) made from amorphous carbon of the DLC type.

17. A process for coating a piston (1) according to one of claims 1 to 14, **characterized in that** the process comprises the following steps:
- a step for positioning a mask (40) on the piston (1), and
- a step for localized deposition of a friction-reducing surface coating (20; 10; 30; 10, 20; 20, 30) through the mask (40), at least on the at least one contact land (12; 11; 13; 11, 12; 12, 13).

18. A process for implementing a heat engine according to one of claims 15 or 16, **characterized in that** the skirt (2) and the at least one contact land (12; 11; 13; 11, 12; 12, 13) including the friction-reducing surface coating (10; 30; 10, 20; 20, 30) make up the contact areas (Z2; Z4) of the piston (1) in the counter-part (C).
